(19) Europäisches Patentamt
European Patent Office
Office européen des brevets

(11) **EP 4 641 486 A1**

(12) **EUROPEAN PATENT APPLICATION**
published in accordance with Art. 153(4) EPC

(43) Date of publication:
29.10.2025 Bulletin 2025/44

(21) Application number: 23905712.8

(22) Date of filing: 07.12.2023

(51) International Patent Classification (IPC):
*G06T 7/00* (2017.01)     *G06T 17/20* (2006.01)

(52) Cooperative Patent Classification (CPC):
Y02A 90/10

(86) International application number:
PCT/CN2023/137012

(87) International publication number:
WO 2024/131545 (27.06.2024 Gazette 2024/26)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.12.2022 CN 202211657192

(71) Applicant: Shining 3D Tech Co., Ltd.
Hangzhou, Zhejiang 311258 (CN)

(72) Inventors:
• MA, Chao
  Hangzhou, Zhejiang 311258 (CN)
• ZHAO, Xiaobo
  Hangzhou, Zhejiang 311258 (CN)
• CHEN, Xiaojun
  Hangzhou, Zhejiang 311258 (CN)
• WANG, Jialei
  Hangzhou, Zhejiang 311258 (CN)

(74) Representative: Metida
Gyneju str. 16
01109 Vilnius (LT)

(54) **FOREIGN MATTER IDENTIFICATION METHOD AND APPARATUS FOR INTRAORAL SCANNER, AND DEVICE AND STORAGE MEDIUM**

(57) The present disclosure relates to a method for identifying foreign object for an intraoral scanner, an apparatus, a device, and a storage medium. The method includes obtaining an intraoral scanned image of a target user by scanning an oral cavity of the target user using an intraoral scanner. A target identification parameter for identifying a scanning head window on the intraoral scanner is determined based on the intraoral scanned image. A lens of the scanning head window is obstructed by a foreign object determined by performing a foreign object identification analysis based on the target identification parameter. The present application can directly analyze the target identification parameter, which facilitates a subsequent cleaning of the identified foreign object. This solves a problem of inaccurate three-dimensional morphological data collected due to foreign object obstructing the lens, and is beneficial to improving a processing and restoring effect of teeth.

FIG. 1

## Description

## TECHNICAL FIELD

The present disclosure relates to a technical field of foreign object identification, and in particular, to a method for identifying a foreign object for an intraoral scanner, an apparatus, a device and a storage medium.

## BACKGROUND

An intraoral scanner, also known as an oral digital impression device, is used to collect three-dimensional morphological data of teeth and gums inside an oral cavity, and use the three-dimensional morphological data to process and repair teeth. It can improve an efficiency medical treatment and reduce cumulative errors caused by a data conversion in a traditional processing process.

However, when using the intraoral scanner to scan the oral cavity, foreign objects such as saliva, debris, and mist in the oral cavity may block a lens in a scanning window of the intraoral scanner. The lens obstructed by the foreign object cannot scan reliable three-dimensional morphological data, which ultimately affects a processing and restoring effect of the teeth. Therefore, it is urgent to propose a foreign object identification method for the intraoral scanner.

## SUMMARY

## (I) Technical problems to be resolved.

In order to solve the technical problems or at least partially solve the above technical problems, the present disclosure provides a method for identifying a foreign object for an intraoral scanner, an apparatus, a device and a storage medium.

## (II) Technical solutions

The present disclosure provides a method for identifying a foreign object for an intraoral scanner, the method comprises:

Acquiring an intraoral scanned image of a target user, the intraoral scanned image being obtained by scanning an oral cavity of the target user using an intraoral scanner;

Determining a target identification parameter for identifying a scanning head window on the intraoral scanner based on the intraoral scanned image;

Determining whether a lens of the scanning head window is obstructed by a foreign object by performing a foreign object identification analysis based on the target identification parameter.

The present disclosure also provides an apparatus for identifying a foreign object for an intraoral scanner, the apparatus comprises:

An acquisition module, being configured to acquiring an intraoral scanned image of a target user, the intraoral scanned image being obtained by scanning an oral cavity of the target user using an intraoral scanner;

A first determination module, being configured to determine a target identification parameter for identifying a scanning head window on the intraoral scanner based on the intraoral scanned image;

A second determination module, being configured to determine whether a lens of the scanning head window is obstructed by a foreign object by performing a foreign object identification analysis based on the target identification parameter.

The present disclosure also provides an electronic device, the device comprises:

One or more processors;
A storage device for storing one or more programs,
When the one or more programs are executed by the one or more processors, the one or more processors implement the method provided in the first aspect.

The embodiments of the present disclosure further provide a computer-readable storage medium, where the storage medium stores a computer program, and the computer program is used to execute the method provided by the embodiments of the present disclosure.

## (III) Beneficial effects

The technical solutions provided by the embodiments of the present disclosure have the following advantages compared with the prior art:
The method for identifying the foreign object for the intraoral scanner, the apparatus, the device and the storage medium provided by the embodiments of the present disclosure obtain an intraoral scanned image of a target user, the intraoral scanned image being obtained by scanning an oral cavity of the target user using an intraoral scanner; determine a target identification parameter for identifying a scanning head window on the intraoral scanner based on the intraoral scanned image; determine whether a lens of the scanning head window is obstructed by the foreign object by performing a foreign object identification analysis based on the target identification parameter. Thus, based on the acquired intraoral scanned image, the target identification parameter for identifying the foreign object obstructing the lens is determined, and the foreign object identification analysis can be performed by directly analyzing the target identification parameter, which facilitates a subsequent cleaning of the identified foreign object, solves the problem of inaccurate three-dimensional morphological data collected due to the foreign object obstructing the lens, and is beneficial to improving a processing and restoring effect of teeth.

It is to be understood that the foregoing general description and the following detailed description are exemplary and explanatory only and are not restrictive of the present disclosure.

## BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to more clearly illustrate the embodiments of the present invention or the technical solutions in the prior art, the drawings required for use in the embodiments or the description of the prior art will be briefly introduced below. Obviously, for the skilled in the art, other drawings can be obtained based on these drawings without paying any creative labor.

FIG. 1 is a flow chart of a method for identifying a foreign object for an intraoral scanner provided by one or more embodiments of the present disclosure;
FIG. 2 is a schematic diagram of a partial structure of an intraoral scanner provided by one or more embodiments of the present disclosure;
FIG. 3 is a schematic diagram of a structure of an apparatus for identifying the foreign object for the intraoral scanner provided by one or more embodiments of the present disclosure;
FIG. 4 is a schematic diagram of a structure of an electronic device provided by one or more embodiments of the present disclosure.

## DETAILED DESCRIPTION

In order to make the purpose, technical solutions and advantages of the embodiments of the present disclosure clearer, the technical solutions in the embodiments of the present disclosure may be clearly and completely described below. Obviously, the described embodiments are part of the embodiments of the present disclosure, not all of the embodiments. Based on the embodiments in the present disclosure, all other embodiments obtained by the skilled in the art without a creative work are within a scope of protection of the present disclosure.

In recent years, in a field of dental restoration, a method of obtaining dental model data has gradually shifted from an impression three-dimensional (3D) scanning to an intraoral 3D scanning technology. An emergence of this technology can be said to be another revolution in a digital tooth processing. This technology abandons a method of obtaining dental model data from an impression, a mold remake, and a 3D scanning, and can directly obtain 3D morphology data of teeth and gums through scanning an oral cavity to obtain dental model data. In terms of process time, two steps of the impression and the mold remake are omitted, and in terms of cost, materials, labor costs and model express fees required for the above process are saved, and in terms of customer experience, a discomfort when making the impression can be avoided.

An intraoral 3D scanner uses an invasive optical scanning head to directly scan a user's oral cavity to obtain 3D morphology and color texture information of surfaces of a soft tissue and a hard tissue of teeth, gums, mucosa, etc. in the oral cavity. One method of this device is to use a principle of an active structured light triangulation imaging, use a digital projection system to project active light patterns, and after a camera acquisition system obtains a pattern, this device performs a 3D reconstruction and a splicing through algorithms. Among them, 3D morphology data can be understood as 3D reconstructed point cloud obtained after the 3D reconstruction performed on the intraoral scanned image.

However, due to a cramped environment inside the oral cavity, a volume of the invasive optical scanning head is inevitably limited, which determines that a size of a scanning head inserted into the oral cavity will be controlled within 30mm, that is, only about two teeth can be obtained at a time. In a process of designing and making teeth, a dental industry mostly needs to obtain a full mouth of teeth and gums data inside the oral cavity. Therefore, it is necessary to splice tooth image data obtained at a single time to form all the three-dimensional spatial data consistent with the inside of the oral cavity. When the scanning head is inserted into the oral cavity, due to a difference in ambient temperature inside and outside the oral cavity, especially in a cold environment in winter, a layer of mist will form on a surface of a reflective lens of the scanning head, affecting an optical imaging function. In order to solve this problem, the intraoral scanner generally needs to have an active anti-mist function, which can usually be achieved by heating a reflector or blowing gas. Especially in a narrow space of the scanning head, adding a heating component will affect a utilization rate of an optical field of view and reduce a service life of the scanning head. At the same time, saliva and debris in the mouth may contaminate optical components of the scanner. In addition, if the mist is not completely eliminated, more miscellaneous data will be generated during three-dimensional scanning, affecting an imaging effect.

In order to solve the above problems, the embodiments of the present disclosure provide a method for identifying a foreign object for an intraoral scanner, an apparatus, a device and a storage medium.

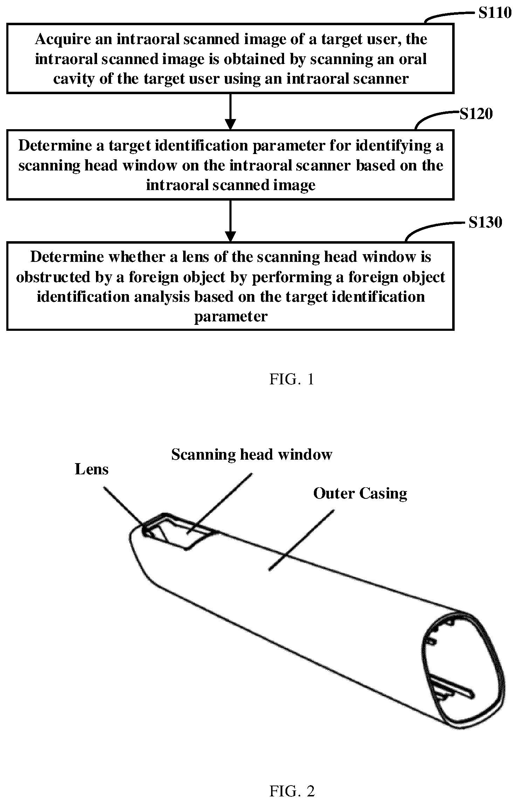

The method for identifying the foreign object for the intraoral scanner provided by the embodiment of the present disclosure is described below in conjunction with FIG. 1 and FIG. 2. In the embodiment of the present disclosure, the method for identifying the foreign object for the intraoral scanner can be executed by an electronic device. The electronic device may include a device with a communication function such as a tablet computer, a desktop computer, a laptop computer, etc., and may also include a device simulated by a virtual machine or a simulator.

FIG. 1 is a schematic flow chart of a method for identifying a foreign object for an intraoral scanner provided in an embodiment of the present disclosure.

As shown in FIG. 1, the method for identifying the foreign object for the intraoral scanner may include the following steps.

S110, an intraoral scanned image of a target user is obtained, where the intraoral scanned image is obtained by scanning an oral cavity of the target user using an intraoral scanner.

In this embodiment, when a tooth restoration needs to be performed for the target user, the targe user can hold the intraoral scanner and insert the intraoral scanner into the target user's oral cavity to scan the teeth or gums to obtain the intraoral scanned image. It is understandable that when there are foreign objects such as saliva, mist, and debris in the oral cavity, the foreign objects may also be scanned by the intraoral scanner, and scanning data of the foreign objects may affect an analysis accuracy of scanning data of the teeth or gums. Therefore, it is necessary to identify the foreign object in the oral cavity to prevent the foreign object from affecting the analysis accuracy of the scanning data of the teeth or gums.

The intraoral scanned image may be a two-dimensional image obtained by scanning through a lens on the intraoral scanner, and may include scanned data of teeth and/or scanned data of gums.

In order to facilitate understanding of a structure of the intraoral scanner, FIG. 2 shows a schematic diagram of a partial structure of the intraoral scanner. As shown in FIG. 2, the intraoral scanner includes a housing, a scanning head window, and a built-in lens. When using the intraoral scanner, the target user can hold the intraoral scanner and insert the intraoral scanner into the oral cavity of the target user. The built-in lens on the intraoral scanner collects the intraoral scanned image through the scanning head window, and an electronic device obtains the intraoral scanned image from the intraoral scanner.

S120, a target identification parameter for identifying the scanning head window on the intraoral scanner are determined based on the intraoral scanned image.

In this embodiment, after the electronic device obtains the intraoral scanned image, it can directly analyze the intraoral scanned image to determine the target identification parameter, or the electronic device can perform a three-dimensional reconstruction on the intraoral scanned image and determine the target identification parameter based on reconstructed three-dimensional reconstruction point cloud.

Among them, the target identification parameter refers to an analysis parameter for directly identifying foreign object.

In some embodiments, the target identification parameter may be a depth value of each of points in the three-dimensional reconstructed point cloud.

In other embodiments, the target identification parameter may be an average depth value of each point in the three-dimensional reconstructed point cloud.

In some other embodiments, the target identification parameter may be a grayscale difference between two corresponding pixel points in adjacent intraoral scanned images.

In further embodiments, the target identification parameter may be a mist identifying probability in each area of the intraoral scanned image.

In some further embodiments, the target identification parameter may be a combination of at least two of the following: the depth value of each point in the three-dimensional reconstructed point cloud, the average depth value of each point in the three-dimensional reconstructed point cloud, the grayscale difference between two corresponding pixel points in adjacent intraoral scanned images, and the mist identifying probability in each area of the intraoral scanned image.

S130, a foreign object identification analysis is performed according to the target identification parameter to determine whether the lens of the scanning head window is obstructed by foreign object.

In this embodiment, the electronic device can determine whether the target identification parameter meet a preset foreign object identification condition. If so, the electronic device determines that the lens of the scanning head window is obstructed by foreign object. Otherwise, it determines that the lens of the scanning head window is not obstructed by foreign object to complete the foreign object identification and analysis process.

Among them, preset foreign object identification conditions are conditions pre-set according to different target identification parameters.

In some embodiments, when the target identification parameter refers the depth value of each point in the three-dimensional reconstructed point cloud, the preset foreign object identification condition refers that the depth value is outside a preset depth value range.

In other embodiments, when the target identification parameter refers the depth average of each point in the three-dimensional reconstructed point cloud, the preset foreign object identification condition refers that the depth average is less than a preset depth average threshold.

In some other embodiments, when the target identification parameter refers the grayscale difference between two pixel points at corresponding positions in adjacent intraoral scanned images, the preset foreign object identification condition refers that the grayscale difference is less than or equal to a preset grayscale difference threshold.

In some further embodiments, when the target identification parameter refers the mist identifying probability in each area of the intraoral scanned image, the preset foreign object identification condition refers that the mist identifying probability is greater than or equal to a preset threshold of mist identifying probability.

Therefore, based on the target identification parameter and the corresponding preset foreign object identification condition, it is possible to quickly and accurately analyze whether the lens of the scanning head window is obstructed by the foreign object.

The disclosed embodiment of the method for identifying foreign object for the intraoral scanner obtains the intraoral scanned image of the target user, where the intraoral scanned image is obtained by scanning the oral cavity of the target user with the intraoral scanner; based on the intraoral scanned image, the target identification parameter for identifying the scanning head window on the intraoral scanner is determined; and the foreign object identification analysis is performed based on the target identification parameter to determine whether the lens of the scanning head window is obstructed by the foreign object. Thus, based on the obtained intraoral scanned image, the target identification parameter for identifying the foreign object obstructing the lens is determined, and the foreign object identification analysis can be performed by directly analyzing the target identification parameter, which facilitates a subsequent cleaning of the identified foreign object, solves a problem of inaccurate three-dimensional morphological data collected due to foreign object obstructing the lens, and is beneficial to improving a processing and restoring effect of teeth.

Furthermore, after executing S130, the method further includes:

> Obtaining a position on the lens obstructed by the foreign object, and generating a foreign object obstruction reminder message based on the position on the lens obstructed by the foreign object;
> Displaying the foreign object obstruction reminder message on a user interface, and/or playing the foreign object obstruction reminder message through an audio device.

Specifically, after the electronic device determines that the lens is obstructed by the foreign object, the electronic device determines a plurality of pixel points corresponding to the foreign object in the intraoral scanned image based on the target identification parameter, or determines a plurality of points corresponding to the foreign object in the three-dimensional reconstructed point cloud based on the target identification parameter; then, based on a first conversion relationship between a world coordinate system where the three-dimensional reconstructed point cloud is located and a camera coordinate system where the lens is located, and the plurality of points corresponding to the foreign object, the electronic device determines the position on the lens obstructed by the foreign object, or, based on a second conversion relationship between the camera coordinate system where the lens is located and an image coordinate system where the intraoral scanned image is located, and the plurality of pixel points corresponding to the foreign object, the electronic device determines the position on the lens obstructed by the foreign object.

Among them, the foreign object obstruction reminder message refers to warning information determined based on a foreign object obstructing identification result and the position of the lens obstructed by the foreign object.

When the foreign object obstruction reminder message refers to text prompt information, the text prompt information is displayed on the user interface; when the foreign object obstruction reminder message refers to voice prompt information, the voice prompt information is played through the audio device; when the foreign object obstruction reminder message includes voice prompt information and text prompt information, the text prompt information is displayed on the user interface, and the voice prompt information is played through the audio device.

Therefore, by displaying or playing the foreign object obstruction reminder message, a user is reminded that the lens of the scanning head window is obstructed by foreign object, which facilitates the user to clean the scanning head window in time, thereby improving the user's scanning experience and reducing an interference of miscellaneous data during the scanning process.

In another embodiment of the present disclosure, the target identification parameter is determined based on the three-dimensional reconstructed point cloud obtained by reconstructing the intraoral scanned image, and it is further determined whether the lens of the scanning head window is obstructed by foreign object.

In the disclosed embodiment, optionally, S120 specifically includes: performing the three-dimensional reconstruction on the intraoral scanned image to obtain the three-dimensional reconstructed point cloud; and determining the target identification parameter based on the three-dimensional reconstructed point cloud.

Specifically, the electronic device uses a preset three-dimensional reconstruction method to perform the three-dimensional reconstruction on the intraoral scanned image to obtain the three-dimensional reconstructed point cloud, and determines the target identification parameter based on three-dimensional data of each point in the three-dimensional reconstructed point cloud.

In some embodiments, "determining the target identification parameter based on the three-dimensional reconstructed point cloud" includes: determining the depth value of each point in the three-dimensional reconstructed point cloud, and using the depth value of each point in the three-dimensional reconstructed point cloud as the target identification parameter, where the depth value refers to a vertical distance between a scanned object and the scanning head window;

Correspondingly, S130 includes: if the depth value of at least one first target point in the 3D reconstructed point cloud is outside the preset depth value range, determining that a position on the lens corresponding to the at least one first target point is obstructed by the foreign object.

For ease of understanding, referring to FIG. 2, a vertical line can be drawn toward the scanning head window along a direction of the lens, and a vertical distance between a scanned object and the scanning head window can be determined on the vertical line, that is, the depth value of each point can be determined as the target identification parameter.

Optionally, the scanned object may be at least one of teeth, gums, saliva, mist, and debris in the oral cavity.

The preset depth value range may be predetermined based on an experience. Optionally, the preset depth value range may be (0, 25 mm).

Furthermore, the method for determining the position on the lens corresponding to the at least one first target point includes: calculating the position on the lens corresponding to the at least one first target point based on the first conversion relationship between the world coordinate system where the three-dimensional reconstructed point cloud is located and the camera coordinate system where the lens is located, and the position of the at least one first target point.

Thus, based on the depth value of each point in the three-dimensional reconstructed point cloud and the preset depth value range, it is accurately determined that the position on the lens corresponding to the at least one first target point is obstructed by the foreign object.

In some other embodiments, "determining the target identification parameter based on the three-dimensional reconstructed point cloud" includes: determining an average depth value of each point in the three-dimensional reconstructed point cloud within a preset time period, and using the average depth value of each point in the three-dimensional reconstructed point cloud as the target identification parameter;

Correspondingly, S130 includes: if there is an average depth value of at least one second target point in the three-dimensional reconstructed point cloud is less than a preset average depth value threshold, determining that a position on the lens corresponding to the at least one second target point is obstructed by the foreign object.

The preset time period may be a predetermined continuous time period.

The average depth value threshold may be a minimum value determined in advance based on experience.

It can be understood that if there is at least one second target point in the three-dimensional reconstructed point cloud whose average depth value is less than the preset average depth value threshold, it is determined that within the continuous time period, the depth value of at least one second target point remains stable, while other points change greatly, then it is determined that at least one second target point belongs to the point corresponding to the foreign object.

Furthermore, the method for determining the position on the lens corresponding to the at least one first target point includes: calculating the position on the lens corresponding to the at least one first target point based on the first conversion relationship between the world coordinate system where the three-dimensional reconstructed point cloud is located and the camera coordinate system where the lens is located, and a position of at least one second target point.

Thus, based on the average depth value of each point in the three-dimensional reconstructed point cloud and the preset average depth value threshold value, it is accurately determined that the position on the lens corresponding to the at least one first target point is obstructed by a foreign object.

In summary, based on the three-dimensional reconstructed point cloud obtained by reconstructing the intraoral scanned image, it is possible to accurately determine whether the lens of the scanning head window is obstructed by the foreign object and determine an obstructed position on the lens.

In yet another embodiment of the present disclosure, the target identification parameter is determined based on each pixel point in the intraoral scanned image reconstruction, and further determines whether the lens of the scanning head window is obstructed by the foreign object.

In some embodiments of the present disclosure, the intraoral scanned image includes a plurality of adjacent image frames, and S120 specifically includes: determining a grayscale difference between two pixel points at corresponding positions in any group of adjacent image frames, and using the grayscale difference as the target identification parameter;

Correspondingly, S130 specifically includes: if the grayscale difference is less than or equal to a preset grayscale difference threshold, determining that a position on the lens corresponding to a target pixel point among the two pixel points. is obstructed by the foreign object.

Specifically, a frame difference method is used to calculate the grayscale difference between two pixel points at corresponding positions in any group of adjacent image frames, and it is determined whether the grayscale difference is less than or equal to the preset grayscale difference threshold. If not, it is determined that the two pixel points belong to a foreground of the image frames, that is, it is understood that the grayscale value of a same pixel point in adjacent image frames changes significantly. If so, it is determined that the two pixel points belong to a background of the image frames, that is, it is understood that the grayscale value of the same pixel in adjacent image frames does not change significantly.

Among them, the two pixel points at corresponding positions in any group of adjacent image frames refer to two pixel points at the same coordinates in the adjacent image frames.

The grayscale difference threshold may be a grayscale difference predetermined based on experience. Optionally, the background of the image frame can be determined as follows:

$$|i(t) - i(t-1)| <= T$$

Where, "t" represents the pixel point, i(t) represents the grayscale value of the pixel point in the ith image frame, i(t-1) represents the grayscale value of the pixel point in the (i-1)th image frame, and "T" represents the grayscale difference threshold.

Optionally, the foreground of the image frame may be determined as follows:

$$|i(t) - i(t-1)| > T$$

Furthermore, a method for determining that the position on the lens corresponding to one of the two pixel points is obstructed by the foreign object includes: calculating the position on the lens corresponding to one of the two pixel points based on the second conversion relationship between the image coordinate system where the intraoral scanned image is located and the camera coordinate system where the lens is located, and a position of one of the two pixel points.

Thus, based on the grayscale difference between two pixel points at corresponding positions in any group of adjacent image frames and the preset grayscale difference threshold, it is accurately determined that the position on the lens corresponding to the target pixel point among the two pixel points is obstructed by the foreign object.

In some other embodiments of the present disclosure, S120 specifically includes: using a pre-trained mist detection model to perform a mist identification on the intraoral scanned image, and obtaining a mist identifying probability in each area of the intraoral scanned image, and using the mist identifying probability as the target identification parameter;
Correspondingly, S130 specifically includes: if the mist identifying probability in at least one target area of the intraoral scanned image is greater than or equal to a preset threshold of mist identifying probability, determining that a position on the lens corresponding to the at least one target area is obstructed by the foreign object.

Among them, "using a pre-trained mist detection model to perform a mist identification on the intraoral scanned image, and obtaining a mist identifying probability in each area of the intraoral scanned image" includes: using a statistical subnetwork of the pre-trained mist detection model to count a number of pixel points corresponding to each grayscale value to obtain a grayscale histogram; using a classifier of the mist detection model to classify the grayscale histogram to obtain the threshold of mist identifying probability.

The preset threshold of mist identifying probability refers to a probability value for identifying mist that is predetermined based on experience.

Where an existence of the at least one target area in the intraoral scanned image can be understood as one or more pixel points covered by mist.

In order to improve a mist identification accuracy, the intraoral scanned image can be subjected to data enhancement processing. Specifically, before "using a pre-trained mist detection model to perform a mist identification on the intraoral scanned image, and obtaining a mist identifying probability in each area of the intraoral scanned image", the method also includes: multiplying an initial grayscale value corresponding to each pixel point of the intraoral scanned image by a grayscale conversion coefficient to determine the target grayscale value corresponding to each pixel point, and obtaining an enhanced scanning image corresponding to the intraoral scanned image;

Correspondingly, "using a pre-trained mist detection model to perform a mist identification on the intraoral scanned image, and obtaining a mist identifying probability in each area of the intraoral scanned image" includes: using the pre-trained mist detection model to perform the mist identification on the enhanced scanning image, and obtain the mist identifying probability in each area of the intraoral scanned image.

The grayscale conversion coefficient is used to stretch a grayscale value range to highlight a difference in grayscale values of different pixel points. Optionally, the grayscale conversion coefficient can be a proportional coefficient determined in advance based on empirical values.

It can be understood that after the initial grayscale value corresponding to each pixel point in the intraoral scanned image is stretched based on the grayscale conversion coefficient, the grayscale difference between different pixel points can be highlighted to obtain an enhanced scanning image. When the pre-trained mist detection model is used to count the number of pixel points corresponding to each grayscale value of the enhanced scanning image, the number of pixel points with different grayscale values can be compared more obviously, which can improve the analysis accuracy of the mist identifying probability and ultimately improve the analysis accuracy of the lens of the scanning head window being obstructed by mist.

Furthermore, the method for determining the position on the lens corresponding to the at least one first target point includes: calculating the position on the lens corresponding to the at least one first target point based on the second conversion relationship between the image coordinate system where the intraoral scanned image is located and the camera coordinate system where the lens is located, and a position of at least one target area in the intraoral scanned image.

Therefore, the pre-trained mist detection model is used to perform the mist identification on the intraoral scanned image to obtain the mist identifying probability in each area of the intraoral scanned image, and based on the mist identifying probability and the preset threshold of mist identifying probability, it is accurately determined that the position on the lens corresponding to the at least one first target point is obstructed by foreign object.

In summary, whether the lens of the scanning head window is obstructed by foreign object can be accurately determined based on the intraoral scanned image.

In another embodiment of the present disclosure, the foreign object identification result obtained based on the analysis of the intraoral scanned image can be used as an initial identification result, and the foreign object identification result obtained based on the three-dimensional reconstruction point cloud obtained by performing the three-dimensional reconstruction on the intraoral scanned image can be used as a candidate identification result; or, the foreign object identification result obtained based on the three-dimensional reconstruction point cloud obtained by performing the three-dimensional reconstruction on the intraoral scanned image can be used as the initial identification result, and the foreign object identification result obtained based on the analysis of the intraoral scanned image can be used as the candidate identification result. Further, the initial identification result is corrected based on the candidate identification result to determine whether the lens of the scanning head window is obstructed by the foreign object.

In some embodiments, obtaining the foreign object identification result based on the analysis of the intraoral scanned image includes: determining the foreign object identification result based on the depth value of each point in the three-dimensional reconstructed point cloud and the preset depth value range.

In other embodiments, obtaining the foreign object identification result based on the analysis of the intraoral scanned image includes: determine the foreign object identification result based on the average depth value of each point in the three-dimensional reconstructed point cloud and the preset average depth value threshold .

In some other embodiments, obtaining the foreign object identification result based on the analysis of the intraoral scanned image includes: determining a first result based on the depth value of each point in the three-dimensional reconstructed point cloud and the preset depth value range; determining a second result based on the average depth value of each point in the three-dimensional reconstructed point cloud and the preset average depth value threshold; and fusing the first result and the second result to obtain the foreign object identification result.

In some embodiments, determining the foreign object identification result based on the three-dimensional reconstructed point cloud obtained by performing the three-dimensional reconstruction on the intraoral scanned image, including: determining the foreign object identification result based on the grayscale difference between two pixel points at corresponding positions in any group of adjacent image frames, and the preset grayscale difference threshold.

In other embodiments, determining the foreign object identification result based on the three-dimensional reconstructed point cloud obtained by performing the three-dimensional reconstruction on the intraoral scanned image, including: using the pre-trained mist detection model to perform the mist identification on the intraoral scanned image, and obtaining the mist identifying probability and the preset threshold of mist identifying probability; determining the foreign object identification result based on the mist identifying probability and the preset threshold of mist identifying probability.

In some other embodiments, determining the foreign object identification result based on the three-dimensional reconstructed point cloud obtained by performing the three-dimensional reconstruction on the intraoral scanned image, including: determining a third result based on the grayscale difference between two pixel points at corresponding positions in any group of adjacent image frames, and the preset grayscale difference threshold; performing the mist identification on the intraoral scanned image using the pre-trained mist detection model to obtain the mist identifying probability and the preset threshold of mist identifying probability; determining a fourth result based on the mist identifying probability and the preset threshold of mist identifying probability; and obtaining the foreign object identification result by fusing the third result and the fourth result.

It should be noted that the methods for determining the above foreign object identification result can be found in the description of the above embodiment and is not limited here.

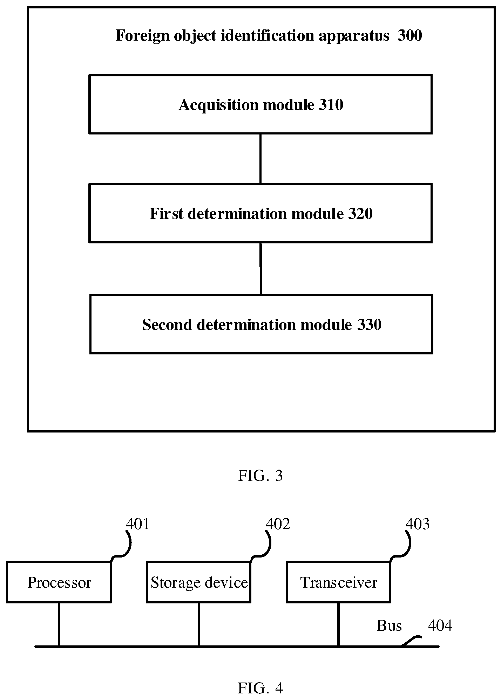

The embodiment of the present disclosure also provides a foreign object identification apparatus for an intraoral scanner for implementing the method for identifying foreign object for intraoral scanner, which is described below in conjunction with FIG. 3. In the embodiment of the present disclosure, the foreign object identification apparatus for the intraoral scanner can be an electronic device. The electronic device can include a device with a communication function such as a tablet computer, a desktop computer, a laptop computer, etc., and can also include a device simulated by a virtual machine or a simulator.

FIG. 3 shows a schematic diagram of a structure of a foreign object identification apparatus of an intraoral scanner provided in an embodiment of the present disclosure.

As shown in FIG. 3, the foreign object identification apparatus 300 of the intraoral scanner may include:

An acquisition module 310 is used to acquire an intraoral scanned image of a target user, where the intraoral scanned image is obtained by scanning an oral cavity of a target user using an intraoral scanner;
A first determination module 320 is used to determine a target identification parameter for identifying a scanning head window on the intraoral scanner based on the intraoral scanned image;
A second determination module 330 is used to perform a foreign object identification analysis according to the target identification parameter to determine whether a lens of the scanning head window is obstructed by a foreign object.

The present disclosure obtains the intraoral scanned image of the target user, where the intraoral scanned image is obtained by scanning the oral cavity of the target user using the intraoral scanner; determines the target identification parameter for identifying the scanning head window on the intraoral scanner based on the intraoral scanned image; and determines whether the lens of the scanning head window is obstructed by the foreign object by performing the foreign object identification analysis based on the target identification parameter. Thus, based on the obtained intraoral scanned image, the target identification parameter for identifying the foreign object obstructing the lens is determined, and the foreign object identification analysis can be performed by directly analyzing the target identification parameter, which facilitates the subsequent cleaning of the identified foreign object, solves the problem of inaccurate three-dimensional morphological data collected due to the foreign object obstructing the lens, and is beneficial to improving the processing and restoring effect of teeth.

In some embodiments of the present disclosure, the first determination module 320 is specifically used to: perform a three-dimensional reconstruction on the intraoral scanned image to obtain a three-dimensional reconstructed point cloud;
The target identification parameter is determined based on the three-dimensional reconstructed point cloud.

In some embodiments of the present disclosure, the first determination module 320 is specifically used to: determine a depth value of each point in the three-dimensional reconstructed point cloud, and use the depth value of each point in the three-dimensional reconstructed point cloud as the target identification parameter, where the depth value refers to a vertical distance between a scanned object and the scanning head window;

Correspondingly, the second determination module 330 is specifically used to: if the depth value of at least one first target point in the three-dimensional reconstructed point cloud is outside a preset depth value range, determine that a position on the lens corresponding to the at least one first target point is obstructed by foreign object.

In some embodiments of the present disclosure, the first determination module 320 is specifically used to: determine an average depth value of each point in the three-dimensional reconstructed point cloud within a preset time period, and use the average depth value of each point in the three-dimensional reconstructed point cloud as the target identification parameter;
Correspondingly, the second determination module 330 is specifically used to: if the average depth value of at least one second target point in the three-dimensional reconstructed point cloud is less than a preset average depth value threshold, determine that the position on the lens corresponding to the at least one second target point is obstructed by foreign object.

In some embodiments of the present disclosure, the intraoral scanned image includes a plurality of adjacent image frames, and the first determination module 320 is specifically used to: determine a grayscale difference between two pixel points at corresponding positions in any group of adjacent image frames, and use the grayscale difference as the target identification parameter;
Correspondingly, the second determination module 330 is specifically configured to: if the grayscale difference is greater than or equal to a preset grayscale difference threshold, determine that a position on the lens corresponding to a target pixel point among the two pixel points is obstructed by the foreign object.

In some embodiments of the present disclosure, the first determination module 320 is specifically used to: use a pre-trained mist detection model to perform a mist identification on the intraoral scanned image, obtain a mist identifying probability in each area of the intraoral scanned image, and use the mist identifying probability as the target identification parameter;
Correspondingly, the second determination module 330 is specifically used to: if the mist identifying probability of at least one target area in the intraoral scanned image is greater than or equal to a preset threshold of mist identifying probability, determine that a position on the lens corresponding to the at least one target area is obstructed by the foreign object.

In some embodiments of the present disclosure, the apparatus further includes: an enhancement module, configured to obtain an enhanced scanned image corresponding to the intraoral scanned image by determining a target grayscale value corresponding to each pixel point in the intraoral scanned image by multiplying an initial grayscale value corresponding to each pixel point by a grayscale conversion coefficient;
Correspondingly, the second determination module 330 is specifically used to: utilize the pre-trained mist detection model to perform a mist identification on the enhanced scanning image, and obtain the mist identifying probability in each area of the intraoral scanned image.

In some embodiments of the present disclosure, the apparatus further includes:

> A generating module, used for acquiring a position on the lens obstructed by the foreign object, and generating a foreign object obstruction reminder message based on the position on the lens obstructed by the foreign object;
> The reminder module is used to display the foreign object obstruction reminder message on the user interface and/or to play the foreign object obstruction reminder message through an audio device.

It should be noted that the foreign object identification apparatus 300 of the intraoral scanner shown in FIG. 3 can execute each step in the method embodiments shown in FIG. 1 to FIG. 2, and realize each process and effect in the method embodiments shown in FIG. 1 to FIG. 2, which will not be elaborated here.

FIG. 4 shows a schematic diagram of a structure of an electronic device provided by an embodiment of the present disclosure.

As shown in FIG. 4, the electronic device may include a processor 401 and a storage device 402 storing computer program instructions.

Specifically, the processor 401 may include a central processing unit (CPU), or an application specific integrated circuit (ASIC), or may be configured to implement one or more integrated circuits of the embodiments of the present application.

The storage device 402 may include a large capacity storage device for information or instructions. By way of example and not limitation, the storage device 402 may include a hard disk drive (HDD), a floppy disk drive, a flash memory, an optical disk, a magneto-optical disk, a tape, or a universal serial bus (USB) drive or a combination of two or more of these. Where appropriate, the storage device 402 may include a removable or non-removable (or fixed) medium. Where appropriate, the storage device 402 may be inside or outside an integrated gateway device. In a particular embodiment, the storage device 402 is a non-volatile solid-state memory. In a particular embodiment, the storage device 402 includes a read-only memory (ROM). Where appropriate, the ROM may be a mask-programmed ROM, a programmable ROM (PROM), an erasable PROM (EPROM), an electrically erasable PROM (EEPROM), an electrically rewritable ROM (EAROM) or a flash memory, or a combination of two or more of these.

The processor 401 reads and executes computer program instructions stored in the storage device 402 to perform the steps of the method for identifying foreign object for the intraoral scanner provided in the embodiment of the present disclosure.

In one example, the electronic device may further include a transceiver 403 and a bus 404. As shown in FIG. 4, the processor 401, the storage device 402 and the transceiver 403 are connected via the bus 404 and communicate with each other.

The bus 404 includes hardware, software or both. For example, but not limitation, the bus may include an accelerated graphics port (AGP) or other graphics bus, an extended industry standard architecture (EISA) bus, a front side bus (FSB), a hyper transport (HT) interconnection, an industrial standard architecture (ISA) bus, an InfiniBand interconnection, a low pin count (LPC) bus, a storage deivce bus, a micro channel architecture (MCA) bus, a peripheral component interconnect (PCI) bus, a PCI-Express (PCI-X) bus, a serial advanced technology attachment (SATA) bus, a video electronics standards association local bus (VLB) bus or other suitable bus or two or more of these combinations. Where appropriate, the bus 404 may include one or more buses. Although the embodiment of the present application describes and illustrates a specific bus, the present application considers any suitable bus or interconnection.

The following is an embodiment of a computer-readable storage medium provided in an embodiment of the present disclosure. The computer-readable storage medium and the method for identifying foreign object for the intraoral scanner in the above-mentioned embodiments belong to a same inventive concept. For details not described in detail in the embodiment of the computer-readable storage medium, reference can be made to the embodiment of the method for identifying foreign object for the intraoral scanner in the above-mentioned embodiments.

This embodiment provides a storage medium including computer executable instructions. When the computer executable instructions are executed by a computer processor, they are used to perform the method for identifying foreign object for the intraoral scanner. The method includes:

> Acquiring an intraoral scanned image of a target user, where the intraoral scanned image is obtained by scanning an oral cavity of the target user using an intraoral scanner;
> Based on the intraoral scanned image, determining a target identification parameter for identifying a scanning head window on the intraoral scanner;
> Performing a foreign object identification analysis based on the target identification parameter to determine whether the lens of the scanning head window is obstructed by a foreign object.

Of course, the storage medium including computer executable instructions provided in the embodiment of the present disclosure is not limited to the above method operations, and the computer executable instructions can also execute the relevant operations in the method for identifying foreign object for the intraoral scanner provided in any embodiment of the present disclosure.

Through the above description of the implementation methods, the skilled in the art can clearly understand that the present disclosure can be implemented by means of software and necessary general hardware, and of course it can also be implemented by hardware, but in many cases the former is a better implementation method. Based on such an understanding, the technical solution of the present disclosure can be essentially or the part that contributes to the prior art can be embodied in the form of a software product, and the computer software product can be stored in a computer-readable storage medium, such as a computer floppy disk, a read-only memory (ROM), a random access memory (RAM), a flash memory (FLASH), a hard disk or an optical disk, etc., including a number of instructions for a computer cloud platform (which can be a personal computer, a server, or a network cloud platform, etc.) to execute the method for identifying foreign object for the intraoral scanner provided by each embodiment of the present disclosure.

Note that the above are only preferred embodiments of the present disclosure and the technical principles used. Those skilled in the art may understand that the present disclosure is not limited to the specific embodiments herein, and that various obvious changes, readjustments and substitutions can be made by those skilled in the art without departing from the scope of protection of the present disclosure. Therefore, although the present disclosure is described in more detail through the above embodiments, the present disclosure is not limited to the above embodiments, and may include more other equivalent embodiments without departing from the concept of the present disclosure, and the scope of the present disclosure is determined by the scope of the appended claims.Industrial Applicability.

The present invention determines the target identification parameter for identifying the foreign object obstructing the lens based on the acquired intraoral scanned image. The foreign object identification analysis can be performed directly by analyzing the target identification parameter, which facilitates the subsequent cleaning of the identified foreign object, solves the problem of inaccurate three-dimensional morphological data collected due to foreign bodies obstructing the lens, and is beneficial to improving the processing and restoring effect of teeth.

## Claims

1. A method for identifying a foreign object for an intraoral scanner, **characterized in that** the method comprises:

   acquiring an intraoral scanned image of a target user, the intraoral scanned image being obtained by scanning an oral cavity of the target user using an intraoral scanner;
   determining a target identification parameter for identifying a scanning head window on the intraoral scanner based on the intraoral scanned image;
determining whether a lens of the scanning head window is obstructed by a foreign object by performing a foreign object identification analysis based on the target identification parameter.

2. The method according to claim 1, wherein determining the target identification parameter for identifying the scanning head window on the intraoral scanner based on the intraoral scanned image comprises:

   obtaining a three-dimensional reconstructed point cloud by performing a three-dimensional reconstruction on the intraoral scanned image;
   determining the target identification parameter based on the three-dimensional reconstructed point cloud.

3. The method according to claim 2, wherein determining the target identification parameter based on the three-dimensional reconstructed point cloud comprises:

   determining a depth value of each point in the three-dimensional reconstructed point cloud, and using the depth value of each point in the three-dimensional reconstructed point cloud as the target identification parameter, wherein the depth value refers to a vertical distance between a scanned object and the scanning head window;
   wherein determining whether the lens of the scanning head window is obstructed by the foreign object by performing the foreign object identification analysis based on the target identification parameter comprises:
   in responses that a depth value of at least one first target point in the three-dimensional reconstructed point cloud is outside a preset depth value range, determining that a position on the lens corresponding to the at least one first target point is obstructed by the foreign object.

4. The method according to claim 2, wherein determining the target identification parameter based on the three-dimensional reconstructed point cloud comprises:

   determining an average depth value of each point in the three-dimensional reconstructed point cloud within a preset time period, and using the average depth value of each point in the three-dimensional reconstructed point cloud as the target identification parameter;
   wherein determining whether the lens of the scanning head window is obstructed by foreign object by performing the foreign object identification analysis based on the target identification parameter comprises:

in response that the average depth value of at least one second target point in the three-dimensional reconstructed point cloud is less than a preset average depth value threshold, determining that a position on the lens corresponding to the at least one second target point is obstructed by the foreign object.

5. The method according to claim 1, wherein the intraoral scanned image comprises a plurality of adjacent image frames, and determining the target identification parameter for identifying the scanning head window on the intraoral scanner based on the intraoral scanned image comprises:

determining a grayscale difference between two pixel points at corresponding positions in any group of adjacent image frames, and using the grayscale difference as the target identification parameter;
wherein determining whether the lens of the scanning head window is obstructed by foreign object by performing the foreign object identification analysis based on the target identification parameter comprises:
in response that the grayscale difference is less than or equal to a preset grayscale difference threshold, determining that a position on the lens corresponding to a target pixel point among the two pixel points is obstructed by the foreign object.

6. The method according to claim 1, wherein determining the target identification parameter for identifying the scanning head window on the intraoral scanner based on the intraoral scanned image comprises:

obtaining a mist identifying probability in each area of the intraoral scanned image by performing a mist identification on the intraoral scanned image using a pre-trained mist detection model, and using the identifying probabilities of mist as the target identification parameter;
wherein determining whether the lens of the scanning head window is obstructed by foreign object by performing the foreign object identification analysis based on the target identification parameter comprises:
in response that the mist identifying probability of at least one target area in the intraoral scanned image is greater than or equal to a preset threshold of mist identifying probability, determining that a position on the lens corresponding to the at least one target area is obstructed by the foreign object.

7. The method according to claim 6, wherein before obtaining the mist identifying probability in each area of the intraoral scanned image by performing the mist identification on the intraoral scanned image using the pre-trained mist detection model, the method further comprises:

obtaining an enhanced scanned image corresponding to the intraoral scanned image by determining a target grayscale value corresponding to each pixel point in the intraoral scanned image by multiplying an initial grayscale value corresponding to each pixel point by a grayscale conversion coefficient; and
wherein obtaining the mist identifying probability in each area of the intraoral scanned image by performing the mist identification on the intraoral scanned image using the pre-trained mist detection model comprises
obtaining the mist identifying probability in each area of the intraoral scanned image by performing a mist identification on the enhanced scanning image using the pre-trained mist detection model.

8. The method according to any one of claims 1 to 7, wherein after determining that the lens of the scanning head window is obstructed by the foreign object, the method further comprises:

acquiring a position on the lens obstructed by the foreign object, and generating a foreign object obstruction reminder message based on the position on the lens obstructed by the foreign object;
displaying the foreign object obstruction reminder message on a user interface, and/or playing the foreign object obstruction reminder message through an audio device.

9. An apparatus for identifying a foreign object for an intraoral scanner, **characterized in that** the apparatus comprises:

an acquisition module, being configured to acquiring an intraoral scanned image of a target user **in that** month, the intraoral scanned image being obtained by scanning an oral cavity of the target user using an intraoral scanner;
a first determination module, being configured to determine a target identification parameter for identifying a scanning head window on the intraoral scanner based on the intraoral scanned image;
a second determination module, being configured to determine whether a lens of the scanning head window is obstructed by a foreign object by performing a foreign object identification analysis based on the target identification parameter.

10. An electronic device, **characterized in that** the electronic device comprises:

   a processor;
   a storage device for storing executable instructions;
   the processor is configured to read the executable instructions from the storage device and execute the executable instructions to implement the method described in any one of claims 1 to 8.

11. A computer-readable storage medium having a computer program stored thereon, **characterized in that** the storage medium stores the computer program, and when the computer program is executed by a processor, the processor implements the method according to any one of claims 1 to 8.

S110

Acquire an intraoral scanned image of a target user, the intraoral scanned image is obtained by scanning an oral cavity of the target user using an intraoral scanner

S120

Determine a target identification parameter for identifying a scanning head window on the intraoral scanner based on the intraoral scanned image

S130

Determine whether a lens of the scanning head window is obstructed by a foreign object by performing a foreign object identification analysis based on the target identification parameter

FIG. 1

Lens

Scanning head window

Outer Casing

FIG. 2

Foreign object identification apparatus  300

Acquisition module 310

First determination module 320

Second determination module 330

FIG. 3

401

402

403

Processor

Storage device

Transceiver

Bus     404

FIG. 4

## INTERNATIONAL SEARCH REPORT

| International application No. |
| --- |
| **PCT/CN2023/137012** |

### A. CLASSIFICATION OF SUBJECT MATTER

G06T7/00(2017.01)i;  G06T17/20(2006.01)i

According to International Patent Classification (IPC) or to both national classification and IPC

### B. FIELDS SEARCHED

Minimum documentation searched (classification system followed by classification symbols)

IPC: G06T G06V H04N

Documentation searched other than minimum documentation to the extent that such documents are included in the fields searched

Electronic data base consulted during the international search (name of data base and, where practicable, search terms used)

CJFD, CNTXT, ENTXT, ENTXTC, WPABS, WPABSC, IEEE: 灰度, 口内三维扫描仪, 口腔数字印模仪, 三维, 扫描仪, 深度, 识别, 雾, 雾气检测模型, 异物, 遮蔽, 遮挡, 阈值, 牙齿, 3D, depth, hand, held, identify, intraoral, occlusion, recognition, scanner, gray, fog, fog detection model, object, obscuration, threshold, teeth

### C. DOCUMENTS CONSIDERED TO BE RELEVANT

| Category* | Citation of document, with indication, where appropriate, of the relevant passages | Relevant to claim No. |
| --- | --- | --- |
| PX | CN 116245804 A (SHINING 3D TECH CO., LTD.) 09 June 2023 (2023-06-09) claims 1-11 | 1-11 |
| Y | CN 114730466 A (ALIGN TECHNOLOGY, INC.) 08 July 2022 (2022-07-08) description, paragraphs [0106]-[0369] | 1-5, 8-11 |
| Y | CN 112734948 A (SHINING 3D TECH CO., LTD.) 30 April 2021 (2021-04-30) description, paragraphs [0010]-[0012] | 1-5, 8-11 |
| A | US 2020315460 A1 (ALIGN TECHNOLOGY, INC.) 08 October 2020 (2020-10-08) entire document | 1-11 |
| A | WO 2021211871 A1 (ALIGN TECHNOLOGY, INC.) 21 October 2021 (2021-10-21) entire document | 1-11 |
| A | WO 2022212507 A1 (CYBERDONTICS (USA), INC.) 06 October 2022 (2022-10-06) entire document | 1-11 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 February 2024** | **20 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/137012**

| Patent document cited in search report | | | Publication date (day/month/year) | Patent family member(s) | | | Publication date (day/month/year) |
|---|---|---|---|---|---|---|---|
| CN | 116245804 | A | 09 June 2023 | None | | | |
| CN | 114730466 | A | 08 July 2022 | US | 2021100643 | A1 | 08 April 2021 |
| | | | | US | 2021100642 | A1 | 08 April 2021 |
| | | | | EP | 4026091 | A1 | 13 July 2022 |
| | | | | WO | 2021046434 | A1 | 11 March 2021 |
| | | | | CA | 3153131 | A1 | 11 March 2021 |
| | | | | AU | 2020341707 | A1 | 24 March 2022 |
| | | | | US | 2021059796 | A1 | 04 March 2021 |
| CN | 112734948 | A | 30 April 2021 | WO | 2022156595 | A1 | 28 July 2022 |
| US | 2020315460 | A1 | 08 October 2020 | US | 2016171128 | A1 | 16 June 2016 |
| | | | | US | 2013110469 | A1 | 02 May 2013 |
| | | | | US | 2021145287 | A1 | 20 May 2021 |
| | | | | US | 2019167113 | A1 | 06 June 2019 |
| | | | | DK | 2596477 | T3 | 08 March 2021 |
| | | | | US | 2022142487 | A1 | 12 May 2022 |
| | | | | WO | 2012011101 | A2 | 26 January 2012 |
| | | | | US | 2023284908 | A1 | 14 September 2023 |
| | | | | DE | 202011111080 | U1 | 20 May 2019 |
| | | | | EP | 3813027 | A1 | 28 April 2021 |
| | | | | US | 2021093201 | A1 | 01 April 2021 |
| | | | | EP | 2596477 | A2 | 29 May 2013 |
| | | | | ES | 2848157 | T3 | 05 August 2021 |
| | | | | US | 2020022584 | A1 | 23 January 2020 |
| | | | | US | 2022330830 | A1 | 20 October 2022 |
| WO | 2021211871 | A1 | 21 October 2021 | EP | 4136569 | A1 | 22 February 2023 |
| | | | | US | 2021321872 | A1 | 21 October 2021 |
| | | | | WO | 2021211871 | A1 | 21 October 2021 |
| | | | | CN | 115884727 | A | 31 March 2023 |
| WO | 2022212507 | A1 | 06 October 2022 | None | | | |

Form PCT/ISA/210 (patent family annex) (July 2022)